# EUROPÄISCHE PATENTSCHRIFT

(11) **EP 3 026 454 B1**
(45) Veröffentlichungstag und Bekanntmachung des Hinweises auf die Patenterteilung: **07.02.2024**
(21) Anmeldenummer: 14195119.4
(22) Anmeldetag: 27.11.2014
(51) Int. Cl.: G01S 5/02, H04W 64/00

(54) **Verfahren und drahtloses Kommunikationssystem zum automatischen Bestimmen der Position eines stationären drahtlosen Zugangspunktes für mobile Endgeräte, stationärer drahtloser Zuganspunkt und Computerprogramm**
Method and wireless communication system for automatically determining the position of a stationary wireless access point for mobile end devices, stationary wireless access point and computer program
Procédé et système de communication sans fil pour la détermination automatique de la position d'un point d'accès sans fil fixe pour terminaux mobiles, point d'accès sans fil fixe et programme informatique

(43) Veröffentlichungstag der Anmeldung: 01.06.2016
(73) Patentinhaber: Deutsche Telekom AG, 53113 Bonn (DE)
(72) Erfinder: Witych, Michael, 53227 Bonn (DE)
(74) Vertreter: Blumbach · Zinngrebe Patentanwälte PartG mbB

(56) Entgegenhaltungen:
- WO-A1-2014/022069
- US-A1- 2011 176 523
- US-A1- 2013 072 217
- US-A1- 2014 274 113
- US-B1- 8 370 629

## Beschreibung

Die Erfindung betrifft ein Verfahren, ein drahtloses Kommunikationssystem, einen stationären drahtlosen Zugangspunkt sowie ein Computerprogramm zum automatischen Bestimmen der Position eines stationären drahtlosen Zugangspunktes mit Hilfe mobiler Endgeräte.

Ein Kriterium der Informationstechnologie kann darin gesehen werden, Daten zu sammeln und diese zu Auswertungszwecken bereitzustellen. Aufgrund des schnellen Wachstums der Mobilkommunikation und der zunehmenden Leistungsfähigkeit von Smart Phones beginnt sich eine besondere Form des Datensammelns zu verbreiten, die als mobiles Crowdsourcing bekannt geworden ist.

In der WO 2014/022069 A1 wird unter anderem ein Verfahren beschrieben, um crowdsourcing Daten von mobilen Access Points zu verarbeiten. Hierzu werden von mobilen Geräten Datensätze von Access Points gesammelt und zu einem Server übertragen. Um die zu übertragende Datenmenge und den Energieverbrauch der mobilen Endgeräte reduzieren zu können, schlägt die WO 2014/022069 A1 vor, empfangene WiFi-Abtastlisten und ihre entsprechenden Ortsbeschreibungen in Abhängigkeit von Auswahlkriterien zu konsolidieren, um einen WiFi-AP-Datensatz zu gewinnen, der dann zu einem Server übertragen wird.

In der US 8370 629 B1 werden ein System und ein Verfahren zur Bestimmung und Freigabe von vertrauenswürdigen Standortdaten beschrieben, wobei das System ein Netzwerkgerät und mindestens zwei unabhängige vertrauenswürdige Quellen von Standortdaten bzw. Standortunterstützungsdaten umfasst, wobei die mindestens zwei unabhängigen vertrauenswürdigen Quellen eindeutige und unveränderliche ID-Codes haben, und wobei das Netzwerkgerät die Standortinformationen bzw. Standortunterstützungsdaten von den mindestens zwei unabhängigen vertrauenswürdigen Quellen empfängt, und das Netzwerkgerät eine vertrauenswürdige Standortschätzung durch Vergleich der Standortdaten der mindestens zwei unabhängigen vertrauenswürdigen Quellen berechnet.

Aus US 2013/072217 A1 ist ein auf TOA (Time of Arrival) basierendes Positionierungssystem bekannt, das einen berechneten Anfangsstandort eines drahtlosen Netzwerkgerätes verwendet, wobei für jedes einer Vielzahl von drahtlosen Referenznetzwerkgeräten ein Abstand zwischen dem drahtlosen Netzwerkgerät und dem drahtlosen Referenznetzwerkgerät bestimmt wird, zumindest teilweise basierend auf einer Hin- und Rücklaufzeit zwischen dem drahtlosen Netzwerkgerät und dem drahtlosen Referenznetzwerkgerät, und wobei ein anfänglicher Standort des drahtlosen Netzwerkgeräts zumindest teilweise auf der Grundlage eines Standorts jedes der mehreren drahtlosen Referenznetzwerkgeräte berechnet werden kann, und wobei ein Standort des drahtlosen Netzwerkgeräts zumindest teilweise auf der

Grundlage des berechneten anfänglichen Standorts, der Entfernung zu jedem der drahtlosen Referenznetzwerkgeräte und einer anfänglichen Abstandskalibrierungskonstante geschätzt werden kann.

In US 2011/176523 A1 werden Verfahren, Programmprodukte und Systeme zur Verwaltung einer Standortdatenbank beschrieben, wobei ein Servercomputer Standortinformationen von standortbewussten mobilen Geräten, wie zum Beispiel GPSfähigen Geräten, empfangen kann, die sich in einem Kommunikationsbereich von Zugangspunkten eines drahtlosen Kommunikationsnetzes befinden, und wobei der Servercomputer durchschnittliche geografische Standorte unter Verwendung der empfangenen Standorte für jeden Zugangspunkt berechnen und darauf basierend die Zugangspunkte den Zellen eines geografischen Gitters zuordnen kann.

In US 2014/274113 A1 werden Systeme, Vorrichtungen und Verfahren für ein mobiles Gerät und einen BasisstationsAlmanach-Server beschrieben, um Crowdsourcing-Informationen zu drosseln, wobei die Crowdsourcing-Informationen verwendet werden, um den Standort einer Basisstation in einem Basisstationsalmanach zu verbessern, und wobei ein Teil des Basisstationsalmanachs einem mobilen Gerät zur Verfügung gestellt wird, welches zum Beispiel seine aktuelle Zelle identifizieren und den Basisstationsalmanach anfordern kann.

Der vorliegenden Erfindung liegt die Aufgabe zugrunde, ein Verfahren, ein drahtloses Kommunikationssystem, einen stationären drahtlosen Zugangspunkt sowie ein Computerprogramm zum automatischen Bestimmen der Position wenigstens eines stationären drahtlosen Zugangspunktes mit Hilfe wenigstens zweier mobiler Endgeräte zu schaffen, welche ermöglichen, dass die Positionen stationärer drahtloser Zugangspunkte erstmalig bestimmt und verbessert werden können, ohne dass die Positionen manuell eingemessen werden müssen.

Ein Kernpunkt der Erfindung kann darin gesehen werden, aufbauend auf dem Ansatz eines mobilen Crowdsourcing, mobile Endgeräte, welche sich in Funkkontakt mit einem stationären drahtlosen Zugangspunkt befinden, einzubinden, um die Position und gegebenenfalls auch die Orientierung des stationären drahtlosen Zugangspunktes vorzugsweise mit gewünschter Genauigkeit automatisch zu bestimmen. Die Erfindung wird durch die unabhängigen Ansprüche definiert. Weitere Ausgestaltungen sind in den abhängigen Ansprüchen angegeben.

Das oben genannte technische Problem wird zum einen durch die Verfahrensschritte des Anspruchs 1 gelöst.

Danach ist ein Verfahren zum automatischen Bestimmen der Position eines stationären drahtlosen Zugangspunktes durch den stationären drahtlosen Zugangspunkt mit Hilfe wenigstens zweier mobiler Endgeräte, gesteuert durch eine Steuereinrichtung des Zugangspunktes und mit Hilfe eines in einem Programmspeicher des Zugangspunktes gespeicherten Computerprogramms und eines in einem Programmspeicher des jeweiligen mobilen Endgeräts gespeicherten Computerprogramms, vorgesehen, welches folgende Schritte aufweist:
a) Bestimmen, für einen ersten Gültigkeitszeitpunkt, in dem stationären Zugangspunkt eines ersten Beobachtungswertes, der einen Abstand des stationären Zugangspunkts zu einem ersten mobilen Endgerät definiert, und eines zweiten Beobachtungswerts, der einen Abstand des stationären Zugangspunkts (20) zu wenigstens einem zweiten mobilen Endgerät (40) definiert; 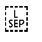
b) Ermitteln von dem ersten mobilen Endgerät für den ersten Gültigkeitszeitpunkt einer ersten Positionsinformation, welche Angaben über eine aktuelle Position des ersten mobilen Endgeräts und deren Genauigkeit enthält, und Übertragen der ermittelten ersten Positionsinformation von dem ersten mobilen Endgerät zu dem wenigstens einen stationären Zugangspunkt, und
   Ermitteln, von dem wenigstens einen zweiten mobilen Endgerät für den ersten Gültigkeitszeitpunkt wenigstens einer zweiten Positionsinformation, welche Angaben über eine aktuelle Position des wenigstens einen zweiten mobilen Endgeräts und deren Genauigkeit enthält, und Übertragen der ermittelten wenigstens einen zweiten Positionsinformation von dem wenigstens einen zweiten mobilen Endgerät zu dem wenigstens einen stationären Zugangspunkt; 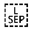
c) Berechnen, in dem stationären Zugangspunkt, einer Position des stationären Zugangspunkts in Abhängigkeit von dem ersten und zweiten Beobachtungswert und der ersten und zweiten Positionsinformation für den ersten Gültigkeitszeitpunkt.

Die berechnete Position kann die Positionskoordinaten des stationären Zugangspunkts und die Genauigkeit der Positionskoordinaten enthalten.

Bei dem stationären drahtlosen Zugangspunkt kann es sich um einen WiFi-Access Point, um einen WLAN-Access Point oder um eine andere ortsfeste drahtlose Basisstation handeln.

Um die Position des stationären Zugangspunktes präziser zu bestimmen, wird in Schritt a) wenigstens ein zweiter Beobachtungswert, der einen Abstand des stationären Zugangspunkts zu wenigstens einem zweiten mobilen Endgerät definiert, bestimmt, und in Schritt b) wird wenigstens eine zweite Positionsinformation, welche von dem wenigstens einen zweiten mobilen Endgerät für den ersten Gültigkeitszeitpunkt bestimmt worden ist und welche die Position und des wenigstens einen zweiten mobilen Endgeräts definiert, bereitgestellt. In Schritt c) wird die Position des stationären Zugangspunktes auch in Abhängigkeit von dem wenigsten einen Beobachtungswert und der wenigstens einen zweiten Positionsinformation berechnet.

Liegt, wie zuvor erläutert, eine temporär stabile Konstellation mit wenigstens drei Kommunikationseinrichtungen, nämlich dem wenigstens einen stationären drahtlosen Zugangspunkt und dem ersten mobilen Endgerät und dem wenigsten einen zweiten mobilen Endgerät, vor, kann in Schritt c) die Position des stationären Zugangspunktes unter Anwendung einer Netzausgleichung berechnet werden, wie sie aus der Geodäsie bekannt ist.

Eine Netzausgleichung, auch als geometrische Netzausgleichung genannt, kann insbesondere dann verwendet werden, wenn der stationäre Zugangspunkt als stochastisch definierte Position in einem Netzausgleichungsprozess behandelt werden kann und das erste mobile Endgerät, das wenigstens eine zweite mobile Endgerät und der stationäre Zugangspunkt temporär ein geometrisches Lagenetz bilden. Temporär bedeutet, dass für wenigstens einen bestimmten Gültigkeitszeitpunkt oder ein bestimmtes Gültigkeitsintervall das erste mobile Endgerät, das wenigstens eine zweite mobile Endgerät und der stationäre Zugangspunkt eine starre Zuordnung zueinander aufweisen.

In der Regel ist der Zeitpunkt einer Messung von und zu einem mobilen Endgerät von Bedeutung, um in einer Netzausgleichung alle Größen auf einen einzigen Gültigkeitszeitpunkt beziehen zu können, um damit temporär ein geometrisches Lagenetz einer gemeinsamen Momentaufnahme zu definieren. Bei der Netzausgleichung zur Bestimmung der Position des stationären Zugangspunktes können die aus der Geodäsie bekannten mathematischen Modelle und Bestimmungsgleichungen als Grundlage dienen und in dem stationären Zugangspunkt abgespeichert sein. All dies ist dem geodätischen Fachmann bekannt.

Das Lagenetz kann alle Koordinatenrichtungen, so auch die Höhe eines 3-dimensionalen Netzes enthalten.

Zur Ausgleichung eines geometrischen Netzes, welches unter anderem koordinatensystemabhängige Elemente aufweist, wird die Definition eines Koordinatensystem benötigt, in dem der Bezug der koordinatensystemabhängigen Größen definiert ist. Diese Definition erfolgt zum Beispiel durch die Festlegung der Koordinaten des Ursprungs, der Richtung der drei Koordinatenachsen und eines gemeinsamen Maßstabes. Diese Festlegung kann in unterschiedlicher Art und Weise bewirkt werden und zum Beispiel auch durch fehlerfreie und/oder statistisch basierte Vorgaben realisiert werden und/oder durch algebraische spezielle Restriktionen zur Festlegungen einer freien Netzausgleichung realisiert werden. Dieses ist dem geodätischen Fachmann bekannt.

Wie die Festlegung im Einzelfall erfolgen soll, hängt unter anderem von den bekannten Zusammenhängen ab wie:
- Welche und wie gute Informationen liegen vor und wie gut kontrollieren sich diese Informationen gegenseitig?
- Wird als Zielkoordinatensystem ein absolut definiertes Koordinatensystem benötigt oder reicht ein beliebiges Berechnungskoordinatensystem zur Darstellung relativer ausgeglichener Zielgrößen aus?

Die Güte der vorliegenden Informationen und die Frage des Zielkoordinatensystems hat auch eine Auswirkung darauf, ob man eine Netzausgleichung in einem freien Netz durchführt, dessen Festlegung keinen negativen Einfluss auf die statistisch basierte Suche nach grob fehlerhaften Eingabefehlern hat, also der Suche nach Ausreißern. Dieses ist dem geodätischen Fachmann ebenfalls bekannt.

Ein Koordinatensystem für die Netzausgleichung kann zum Beispiel dadurch als nicht reines Berechnungskoordinatensystem eines freien Netz festgelegt werden, dass die Eingabegrößen, die in der Ausgleichung algebraisch von den Koordinaten des Ausgleichungskoordinatensystems abhängig sind, durch eine ausreichende Anzahl dieser Koordinaten im Ausgleichungsprozess vorgegeben werden, zum Beispiel als fehlerfreie Größen unter Zwang oder als stochastisch definierte Größen, wie zum Beispiel eine Koordinate und deren Standardabweichung. Eine Netzausgleichung kann auch in einem Koordinatensystem durchgeführt werden, das teilweise ein freies Netz ist, also in welchem nicht alle Koordinatensystemparameter durch die Regeln des freien Netzes bestimmt werden, so zum Beispiel wenn die Höhen der Punkte fehlerfrei bekannt sein sollen, aber die Koordinaten der Horizontalebene in einem freien Netz ausgeglichen werden. Dieses ist dem geodätischen Fachmann bekannt.

Durch die Vorgabe von Koordinaten und/oder Funktionen von Koordinaten unter Zwang und/oder stochastisch können freie, teilfreie und unter Zwang oder stochastisch definierte Netzausgleichungen und deren Berechnungskoordinatensysteme in unterschiedlichen Kombinationen per algebraischer Definitionen erzeugt werden. Dieses ist dem geodätischen Fachmann bekannt.

Liegen mehrere im Wesentlichen zum gleichen Zeitpunkt gültige Ausgleichungsergebnisse von überlappenden geometrischen Netzen vor, die jeweils einen separaten stationären Zugangspunkt und zum Beispiel das erste mobile Endgerät enthalten, so können diese unterschiedlichen Netzausgleichungsergebnisse zusätzlich über die bekannten Blockausgleichungen verbessert werden, indem Blöcke von geschätzten Punkten unter Berücksichtigung ihrer jeweiligen Varianz-Kovarianz-Matrizen als Nachverarbeitungsschritt zum Zwecke der weiteren Verbesserung oder der Überprüfung der Positionen zusammen ausgeglichen werden. Hierdurch erhalten die gemeinsamen Punkte und ebenfalls die nicht gemeinsamen Punkte eine Verbesserung in ihren Koordinaten und deren Genauigkeiten. Relevante Unterschiede im Gültigkeitszeitpunkt können entsprechend wie bei zusätzlichen Beobachtungen mindestens teilweise berücksichtigt werden. Dieses ist dem geodätischen Fachmann bekannt.

Entspricht ein Berechnungskoordinatensystem einer geometrischen Netzausgleichung nicht dem Zielkoordinatensystem, so kann nachträglich das Netz inklusive der Genauigkeiten der Punkte durch Ähnlichkeitstransformationen in ein anderes vorgegebenes Zielkoordinatensystem transformiert werden, sofern dieses nicht bereits in der Erstausgleichung realisiert werden kann. Dieses ist dem geodätischen Fachmann bekannt.

Alles bisher Beschriebene kann bei Vorlage der entsprechenden Informationen in dem ersten mobilen Endgerät, und/oder in dem wenigstens einen zweiten mobilen Endgerät, und/oder in einem Server und/oder in dem stationären Zugangspunkt ausgewertet und berechnet werden.

Die Position des stationären Zugangspunktes wird präziser bestimmt, indem die Schritte a) bis c) für wenigstens einen zweiten, späteren Gültigkeitszeitpunkt wiederholt werden und die in Schritt c) für den ersten Gültigkeitszeitpunkt und den wenigsten einen zweiten Gültigkeitszeitpunkt berechneten Positionen zur iterativen Korrektur aufdatiert werden. Ein solches Verfahren ist für den Fachmann auf dem Gebiet der Geodäsie hinlänglich bekannt.

Zweckmäßigerweise werden der erste Beobachtungswert mit Hilfe einer Streckenmessung zwischen dem stationären Zugangspunkt und dem ersten Mobilen Endgerät und/oder der wenigstens zweite Beobachtungswert mit Hilfe einer Streckenmessung zwischen dem stationären Zugangspunkt und dem wenigstens einen zweiten Mobilen Endgerät bestimmt. Die Streckenmessung kann von dem stationären Zugangspunkt beispielsweise durch ein RSS (Received Signal Strength)- oder TDOA (Time Difference Of Arrival)-Verfahren oder durch eine Bildverarbeitung vorgenommen werden.

Es übertragen das erste mobile Endgerät und das wenigstens eine zweite mobile Endgerät ihre jeweilige Positionsinformation zum stationären Zugangspunkt.

Die erste Positionsinformation und die wenigstens eine zweite Positionsinformation enthalten neben den Positionskoordinaten auch jeweils Genauigkeiten der Positionskoordinaten. Im stationären Zugangspunkt wird in Abhängigkeit von dessen Position und der ersten Positionsinformation und/oder der wenigstens einen zweiten Positionsinformation und/oder von einem Bewegungsprofil des ersten mobilen Endgeräts und/oder von einem Bewegungsprofil des wenigstens einen zweiten mobilen Endgeräts geprüft werden, ob und/oder wann eine Genauigkeit der Position des stationären Zugangspunktes verbessert werden kann. Wenn ja, werden die Schritte a) bis c) durch den stationären Zugangspunkt erneut ausgeführt.

Hierzu ist der stationäre Zugangspunkt dazu ausgebildet, anhand der Bewegungsprofile des ersten mobilen Endgeräts und/oder des zweiten mobilen Endgeräts einen Aufenthaltsort zu einem bestimmten Gültigkeitszeitpunkt vorherzusagen. Die Bewegungsprofile können im jeweiligen mobilen Endgerät ermittelt und zum stationären Zugangspunkt übertragen werden. Die Bewegungsprofile können aber auch im stationären Zugangspunkt berechnet werden.

Um neben der Position auch die Orientierung des stationären Zugangspunktes berechnen zu können, wird für den ersten Gültigkeitszeitpunkt wenigstens ein dritter Beobachtungswert, der eine relative Orientierung des stationären Zugangspunkts zu dem ersten mobilen Endgerät definiert, bestimmt, wobei in Schritt c) die Position und eine Orientierung des stationären Zugangspunktes berechnet wird.

Vorteilhafterweise kann nach Ausführung des Schritts c) in dem stationären Zugangspunkt geprüft werden, ob die berechnete Position und/oder Orientierung innerhalb eines festgelegten Toleranzbereichs bzw. Genauigkeitsbereichs liegen und/oder plausibel sind. Wenn dies der Fall ist, kann die berechnete Position in dem stationären Zugangspunkt zur weiteren Verwendung gespeichert werden. Insbesondere kann dann die Position des stationären Zugangspunktes zur Bestimmung der Position eines mobilen Endgerätes und/oder eines weiteren stationären Zugangspunktes mit berücksichtigt werden.

Das oben genannte technische Problem wird ebenfalls durch ein drahtloses Kommunikationssystem zur automatischen Bestimmung der Position wenigstens eines stationären drahtlosen Zugangspunktes durch den stationären drahtlosen Zugangspunkt mit Hilfe wenigstens zweier mobiler Endgeräte gemäß Anspruch 6 gelöst.

Das drahtlose Kommunikationssystem weist ein erstes mobiles Endgerät, wenigstens ein zweites mobiles Endgerät, und wenigstens einen stationären drahtlosen Zugangspunkt auf, wobei der wenigstens eine stationäre Zugangspunkt und das erste mobile Endgerät zur drahtlosen Kommunikation miteinander ausgebildet sind und der wenigstens eine stationäre Zugangspunkt (20) und das wenigstens eine zweite mobile Endgerät (40) zur drahtlosen Kommunikation miteinander ausgebildet sind. Der wenigstens eine stationäre Zugangspunkt ist dazu ausgebildet, für einen ersten Gültigkeitszeitpunkt als einen Schritt a) einen ersten Beobachtungswert, der einen Abstand des stationären Zugangspunkts zu dem ersten mobilen Endgerät definiert, und einen zweiten Beobachtungswert, der einen Abstand des wenigstens einen stationären Zugangspunkts zu dem wenigstens einen zweiten mobilen Endgerät definiert, zu bestimmen. Das erste mobile Endgerät ist dazu ausgebildet, als einen Schritt b1) für den ersten Gültigkeitszeitpunkt eine erste Positionsinformation zu bestimmen, welche Angaben über eine aktuelle Position des ersten mobilen Endgeräts und deren Genauigkeit enthält, und die erste Positionsinformation zum stationären Zugangspunkt zu übertragen, wobei das wenigstens eine zweite mobile Endgerät dazu ausgebildet ist, als einen Schritt b2) für den ersten Gültigkeitszeitpunkt wenigstens eine zweite Positionsinformation zu bestimmen, welche Angaben über eine aktuelle Position des wenigstens einen zweiten mobilen Endgeräts und deren Genauigkeit enthält, und die wenigstens eine zweite Positionsinformation zu dem wenigstens einen stationären Zugangspunkt zu übertragen. Der wenigstens eine stationäre Zugangspunkt weist eine Recheneinheit auf, die dazu ausgebildet ist, als einen Schritt c) eine Position des stationären Zugangspunktes in Abhängigkeit von dem ersten und zweiten Beobachtungswert und der ersten und zweiten Positionsinformation für den ersten Gültigkeitszeitpunkt zu berechnen. Weiterhin weist der stationäre Zugangspunkt einen Speicher auf, in dem die berechnete Position speicherbar ist.

Das drahtlose Kommunikationssystem ist dazu ausgebildet, die Schritte a), b1), b2) und c) für wenigstens einen zweiten, späteren Gültigkeitszeitpunkt zu wiederholen, wobei die Recheneinheit des wenigstens einen stationären Zugangspunkts dazu ausgebildet ist, die für den ersten Gültigkeitszeitpunkt und den wenigstens einen zweiten Gültigkeitszeitpunkt berechneten Positionen zur iterativen Korrektur aufzudatieren, und wobei der wenigstens eine stationäre Zugangspunkt eine Steuereinrichtung zum Steuern der automatischen Bestimmung der Position des wenigstens einen stationären Zugangspunkts mit Hilfe eines in einem Programmspeicher des wenigstens einen stationären Zugangspunktes gespeicherten Computerprogramms und jeweils eines in einem Programmspeicher des ersten und wenigstens einen zweiten mobilen Endgeräts gespeicherten Computerprogramms aufweist, und wobei der stationäre Zugangspunkt dazu ausgebildet ist, in Abhängigkeit von dessen Position und der ersten Positionsinformation und/oder der wenigstens einen zweiten Positionsinformation und/oder von einem Bewegungsprofil des ersten mobilen Endgeräts und/oder von einem Bewegungsprofil des wenigstens einen zweiten mobilen Endgeräts zu prüfen, ob und/oder wann eine Genauigkeit der Position des stationären Zugangspunkts (20) verbessert werden kann, und wenn ja, ein erneutes Ausführen der Schritte a), b1), b2) und c) auszulösen.

Wenn zur Positionsbestimmung wenigstens drei beteiligte Einrichtungen, beispielsweise der stationäre Zugangspunkt, das erste mobile Endgerät und wenigstens das zweite mobile Endgerät vorhanden sind, kann in dem stationären Zugangspunkt ein Programm abgespeichert werden, welches die Recheneinheit steuert, um eine Netzausgleichung zur Berechnung der Position des stationären Zugangspunktes durchzuführen.

Vorzugsweise weist der stationäre Zugangspunkt eine Sensoreinrichtung auf, welche dazu ausgebildet ist, den Abstand des stationären Zugangspunktes zum ersten mobilen Endgerät und/oder zum wenigstens einem zweiten mobilen Endgerät zu messen.

Mittels der Sensoreinrichtung können beispielsweise Signalstärken und/oder Signallaufzeiten bezüglich des ersten mobilen Endgeräts und/oder des wenigstens einen zweiten mobilen Endgeräts erfasst und in einer Auswerteeinrichtung des stationären Zugangspunktes ausgewertet werden. Die Auswerteeinrichtung kann auch in der Recheneinheit integriert sein.

Das drahtlose Kommunikationssystem kann wenigstens ein drahtloses lokales Netzwerk, ein sogenanntes WLAN, aufweisen, wobei der wenigstens eine stationäre Zugangspunkt ein Zugangspunkt des drahtlosen lokalen Netzwerkes ist. Ferner kann das drahtlose Kommunikationssystem eine Speichereinrichtung, vorzugsweise eine Datenbank oder ein Speichersystem aufweisen, in welcher technische Daten, insbesondere die Sendeleistung, und/oder Geräteidentifizierungen von mobilen Endgeräten abgespeichert sind. Der stationäre Zugangspunkt ist dazu ausgebildet die technischen Daten und/oder Geräteidentifizierungen aus der Speichereinrichtung auszulesen, um die zur Bestimmung der Beobachtungswerte erforderlichen Informationen über die mobilen Endgeräte zu gewinnen.

Um mobilen Endgeräten zu ermöglichen, ihre Position präziser bestimmen zu können, kann der wenigstens eine stationäre Zugangspunkt dazu ausgebildet sein, eine berechnete Position zum ersten mobilen Endgerät und/oder zu dem wenigstens einen zweiten mobilen Endgerät zu übertragen.

Das oben genannte technische Problem wird ebenfalls durch die Merkmale des Anspruchs 13 gelöst, welche einen stationären drahtlosen Zugangspunkt definieren.

Das oben genannte technische Problem wird ebenfalls durch die Merkmale des Anspruchs 14 gelöst, der ein Computerprogramm betrifft.

Die Erfindung wird nachfolgend anhand eines Ausführungsbeispiels in Verbindung mit den beiliegenden Zeichnungen näher erläutert. Es zeigen:
- Fig. 1: die Draufsicht auf eine Halle, in welcher ein drahtloses lokales Netzwerk installiert ist,
- Fig. 2: das Blockscheinbild eines erfindungsgemäßen stationären drahtlosen Zugangspunktes, welcher in Fig. 1 dargestellt ist, und
- Fig. 3: das Blockscheinbild eines in Fig. 1 gezeigtem Smartphones.

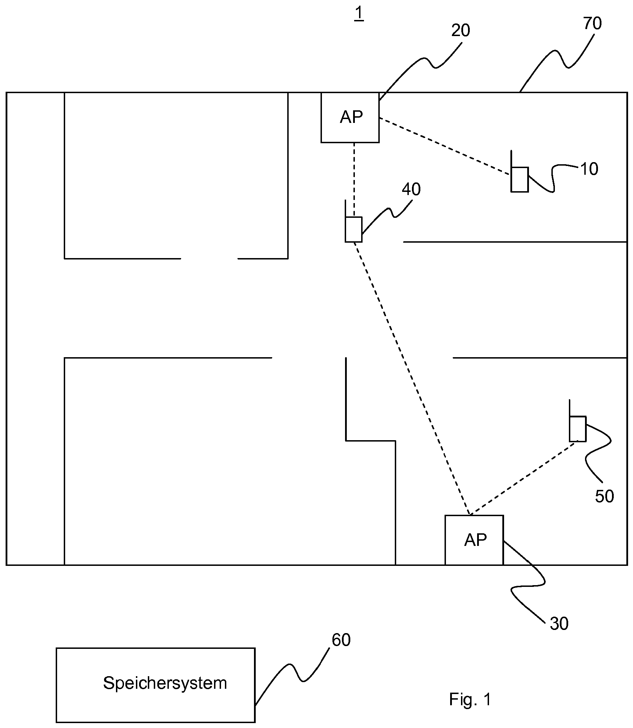

Fig. 1 zeigt in stark vereinfachter Weise die Draufsicht auf eine in mehrere Räume unterteilte Halle 70, die sich auf einem Messegelände befinden kann. In der Halle 70 können mehrere stationäre drahtlose Zugangspunkte fest installiert sein, von denen der Einfachheit halber lediglich die beiden stationären drahtlosen Zugangspunkte 20 und 30 dargestellt sind. Die stationären Zugangspunkte 20 und 30 sind Bestandteil eines drahtlosen lokalen Netzwerkes, auch als WLAN bekannt, welches wiederum Teil eines drahtlosen Kommunikationssystems 1 sein kann. Das drahtlose Kommunikationssystem 1 kann weitere drahtlose lokale Netzwerke, welche auf dem Messegelände installiert sein können, und ein zelluläres Mobilfunknetz umfassen.

Außerdem befinden sich im Augenblick drei mobile Endgeräte 10, 40 und 50 in der Halle 70. Bei den stationären mobilen Zugangspunkten 20 und 30 kann es sich beispielsweise jeweils um einen Wi-Fi-Access Point handeln. Die mobilen Endgeräte 10, 40 und 50 können jeweils als Smartphone realisiert sein. Fig. 1 zeigt weiterhin ein separates Speichersystem 60, welches außerhalb der Halle 70 installiert sein kann. In dem Speichersystem 60 können Gerätekennungen und technische Daten unterschiedlicher mobiler Endgeräte gespeichert sein. Bereits an dieser Stelle sei darauf hingewiesen, dass die stationären Zugangspunkte 20 und 30 dazu ausgebildet sein können, über ein zelluläres Mobilfunknetz auf den Inhalt des Speichersystems 60 zuzugreifen.

Nunmehr werden der prinzipielle Aufbau und die prinzipielle Funktion der Smartphones 10, 40 und 50 anhand des Smartphones 10 und der prinzipielle Aufbau und die prinzipielle Funktion der stationären drahtlosen Zugangspunkte 20 und 30 anhand des stationären Zugangspunkts 20 erläutert.

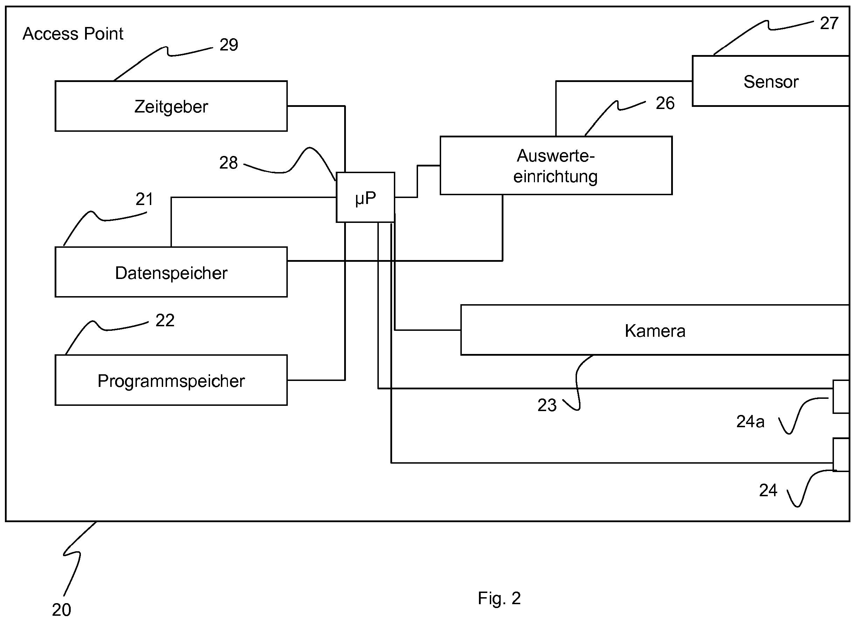

Fig. 2 zeigt ein beispielhaftes Blockschaltbild des stationären drahtlosen Zugangspunktes 20, welcher in Fig. 1 dargestellt ist.

Der stationäre Zugangspunkt 20 weist wenigstens eine drahtlose Datenkommunikationsschnittstelle auf, über die er vorzugsweise mit mobilen Endgeräten, zum Beispiel den Smartphones 10 und 50, und/oder mit einem anderen stationären drahtlosen Zugangspunkt, zum Beispiel mit dem Wi-Fi Access Point 30, Daten austauschen kann. Im vorliegenden Beispiel weist der stationäre Zugangspunkt 20 zwei drahtlose Datenkommunikationsschnittstellen 24 und 24a auf. Bei der Schnittstelle 24 kann es sich um eine Wi-Fi Direct-fähige Schnittstelle handeln, während die Schnittstelle 24a als LTE Direct-fähige Schnittstelle (LTE Long Term Evolution) ausgebildet sein kann, um eine Kommunikation zum Beispiel über ein zelluläres Mobilfunknetz zu ermöglichen. Neben den beispielhaften Wi-Fi Direct-fähigen und LTE Direct-fähigen Datenkommunikationsschnittstellen 24 und 24a können weitere Kommunikationsschnittstellen, wie zum Beispiel Schnittstellen gemäß dem BlueTooth-Standard, oder Nahfeld-Kommunikationsschnittstellen (NFC-Interface, Near Field Communication IF), wie zum Beispiel NFC RFID (NFC Radio Frequency Identification)-fähige Schnittstellen, im stationären Zugangspunkt 20 implementiert sein, die ebenfalls eine Kommunikation mit benachbarten Kommunikationseinrichtungen, wie den Smartphone 10 und 40 ermöglichen.

Wie nachfolgend noch detailliert erläutert wird, kann der stationäre Zugangspunkt 20 über die Datenkommunikationsschnittstellen 24 und 24a unter anderem, sobald selbst und automatisch ermittelt, seine eigenen Orientierungsinformationen und Positionsinformationen sowie Beobachtungswerte, welche relative Orientierungen und/oder relative Positionen zu wenigstens einer anderen Kommunikationseinrichtung betreffen, beispielsweise zu den Smartphones 10 und 40 senden. Eine Orientierungsinformation, die die Orientierung des stationären Zugangspunktes 20 festlegt, kann der stationäre Zugangspunkt 20 beispielsweise mittels einer Bilderfassungseinrichtung 23 und einer Bildverarbeitung selbst erzeugen.

Eine Orientierungsinformation enthält zum Beispiel Angaben über wenigstens einen Orientierungswinkel, deren Genauigkeit und gegebenenfalls über einen Gültigkeitszeitpunkt.

Mit Hilfe der Bilderfassungseinrichtung 23, welche eine digitale Kamera sein kann, kann der stationäre Zugangspunkt Beobachtungswerte betreffend eine absolute und/oder relative Orientierung und/oder eine absolute und/oder relative Position bereitstellen. Die entsprechend aufgezeichneten Bilddaten können in der Kamera 23 oder in einer als Datenspeicher bezeichneten Speichereinrichtung 11 abgelegt werden. In einem Programmspeicher 22 kann ein Programm abgespeichert sein, welches eine Steuereinrichtung 28 ausführen kann, um aus den im Datenspeicher 11 gespeicherten Bilddaten geeignete Orientierungs- und Positionsinformationen für eine Netzausgleichung abzuleiten.

In dem Datenspeicher 21 können Orientierungsinformationen über die absolute Orientierung des stationären Zugangspunktes 20, und/oder absolute Orientierungsinformationen anderer Kommunikationseinrichtungen und wenigstens ein Beobachtungswert abgelegt werden, der jeweils die relative Position oder relative Orientierung zwischen dem stationären Zugangspunkt 20 und einer benachbarten Kommunikationseinrichtung definiert. Im gezeigten Beispiel nach Fig. 1 können dies das mobile Endgerät 10 und/oder das mobile Endgerät 40 sein. In dem Datenspeicher 11 können auch Positionsinformationen über die Position des Smartphones 10 und/oder Positionsinformationen des Smartphones 40 abgelegt werden. Solche Positionsinformationen können wenigstens eine Positionskoordinate, deren Genauigkeit und vorzugsweise einen Gültigkeitszeitpunkt enthalten. Anstelle eines Gültigkeitszeitpunkts kann eine Orientierungs- oder Positionsinformation Angaben enthalten, die dazu verwendet werden können, mit Hilfe einer Interpolation oder Extrapolation aus vorangegangenen Positionsinformationen und/oder Beobachtungswerten einen geeigneten Gültigkeitszeitpunkt zu ermitteln.

Die Steuereinrichtung 28 kann als Mikroprozessor ausgebildet sein. Der Mikroprozessor 28 kann dazu ausgebildet sein, die Positionskoordinaten und, wenn gewünscht, Orientierungswinkel des stationären Zugangspunktes 20 sowie die Genauigkeiten der Orientierungswinkel und/oder Positionskoordinaten in Abhängigkeit von wenigstens einem Beobachtungswert, der die relative Position und, wenn gewünscht, die relative Orientierung zwischen dem stationären Zugangspunkt 20 und wenigstens einem mobilen Endgerät definiert, sowie der Positionsinformation wenigstens eines mobilen Endgeräts zu bestimmen. Der Mikroprozessor 18 ist auch dazu ausgebildet, die Kommunikation mit benachbarten mobilen Endgeräten zum Zwecke der Berechnung seiner Position zu steuern, wozu er entsprechende Anweisungen eines im Programmspeicher 12 abgelegten Programms ausführt. Der Mikroprozessor 18 ist ebenfalls dazu geeignet, Bilddaten der Kamera 23 nach Beobachtungswerten für eine durchzuführende Netzausgleichung zu durchsuchen und diese zu detektieren und zu extrahieren. Mithilfe der Kamera 23 und der Bildverarbeitung eines Kamerabildes im Mikroprozessor 28 können mobile Endgeräte und, sofern erreichbar, auch andere stationäre Objekte als Ziele erkannt und Bildstrahlen zu diesen Zielen ermittelt werden.

Der stationäre Zugangspunkt 20 kann wenigstens eine in der Fig. 2 als Sensor bezeichnete Messeinrichtung 27 zum Messen einer Messgröße enthalten, die einen Beitrag zur Bestimmung eines Beobachtungswertes liefert. Bei der Messeinrichtung 27 kann es sich um bekannte Sensoren handeln, die vorzugsweise zum Messen eines Abstands, eines Winkels oder einer Richtung zu einem mobilen Endgerät ausgebildet sind. Denkbar ist, dass der Sensor 27 zum Messen eines Winkels zwischen sich und wenigstens einer anderen Kommunikationseinrichtung, die sich in der Nachbarschaft zum stationären Zugangspunkt befindet, ausgebildet ist. Bei den benachbarten Kommunikationseinrichtungen kann es sich um die in Fig. 1 gezeigten Smartphones 10 und 40 handeln. Beispielsweise kann der Sensor 27 auch die Signalstärke des Sendesignals des Smartphones 10 und/oder des Smartphones 40 messen, um eine Streckenmessung durchzuführen.

Das vom Sensor 27 erzeugte Messsignal wird beispielsweise einer separaten Auswerteeinrichtung 26 zugeführt. Alternativ können der Sensor 27 und die Auswerteeinrichtung 26 oder der Mikroprozessor 28 und die Auswerteeinrichtung 26 jeweils eine einzige Baukomponente bilden. Die Auswerteeinrichtung 26 ist dazu ausgebildet, in Abhängigkeit von einem empfangenen Messsignal den entsprechenden Beobachtungswert zu bestimmen, der die relative Lage, zum Beispiel den Abstand, zwischen dem stationären Zugangspunkt 20 und einer weiteren Kommunikationseinrichtung, zum Beispiel dem Smartphone 10 oder dem Smartphone 40 definiert.

In dem Programmspeicher 12 kann ferner wenigstens ein Programm gespeichert werden, welches vom Mikroprozessor 28 ausgeführt werden kann, um die Position des stationären Zugangspunkts 20 in Abhängigkeit von einem Beobachtungswert, welcher die relative Position zwischen dem stationären Zugangspunkt 20 und einem benachbarten mobilen Endgerät, beispielsweise dem mobilen Endgerät 10, definiert, und der Positionsinformation des jeweiligen mobilen Endgeräts, zum Beispiel dem Smartphone 10, für einen bestimmten Gültigkeitszeitpunkt zu berechnen.

Vorzugsweise enthält das Programm Anweisungen zur Ausführung einer Netzausgleichung, mit der die Positionskoordinaten des stationären Zugangspunktes 20 und die Genauigkeit der Positionskoordinaten geschätzt werden können. In dem Programmspeicher 12 kann beispielhaft ein Optimierungsalgorithmus zum Durchführen einer freien Netzausgleichung und ein Optimierungsalgorithmus zum Durchführen einer Netzausgleichung unter Verwendung eines vorbestimmten, zum Beispiel a priori bekannten Koordinatensystems abgelegt sein. Der Mikroprozessor 28 kann dazu ausgebildet sein, zum Beispiel ereignis- oder situationsgesteuert einen der beiden Optimierungsalgorithmen aufzurufen und auszuführen, um seine eigene Position und/oder Orientierung und, wenn gewünscht, die Position und/oder Orientierung wenigstens eines benachbarten mobilen Endgeräts zu bestimmen.

Je nach Anwendungsfall können die Optimierungsalgorithmen Gleichungssysteme enthalten, welche auf einem statistischen Modell, insbesondere einem Gauß-Markov-Modell oder einem heuristischen Modell basieren. Solche Gleichungssysteme und Modelle sind hinlänglich bekannt. Vorzugsweise beruhen die Optimierungsalgorithmen bzw. die Netzausgleichungen auf der bekannten Methode der kleinsten Fehlerquadrate. Als Unbekannte können bei der Netzausgleichung die Orientierungswinkel und deren Genauigkeiten und die Positionskoordinaten und deren Genauigkeit des stationären Zugangspunktes 20 verwendet werden, wozu ein gemeinsamer Gültigkeitszeitpunkt für diese zu bestimmenden Größen und für wenigstens einen gemessenen Beobachtungswert sowie gegebenenfalls die Orientierungen und Positionskoordinaten und deren Genauigkeiten benachbarter mobiler Endgeräte verwendet wird.

Der Mikroprozessor 28 kann dazu ausgebildet sein, das im Programmspeicher 12 hinterlegte Programm zum Berechnen der Position, wenn erforderlich, mehrmals auszuführen und anschließend in Abhängigkeit davon eine zusätzliche Koordinatensystemtransformation der Positionsinformation in ein anderes vorgegebenes Zielkoordinatensystem durchzuführen, um die Positionsinformationen zu verbessern oder zu überprüfen.

Ferner kann der stationäre Zugangspunkt 20 einen Zeitgeber 29 aufweisen. Der Zeitgeber 29 kann dazu dienen, zu einem vorbestimmten Gültigkeitszeitpunkt den Mikroprozessor 28 anzustoßen, den Sensor 27 zu aktivieren, um einen Beobachtungswert zu bestimmen, und Positionsinformationen von wenigstens einem mobilen Endgerät in seiner Reichweite anzufordern.

Zudem kann der Mikroprozessor 28 dazu ausgebildet sein, vor Durchführung einer Positionsberechnung im Programmspeicher 12 gespeicherte Anweisungen auszuführen, um beispielsweise geeignete mobile Endgeräte in der Umgebung des stationären Zugangspunktes 20 zu finden und dann aufzufordern, ihre aktuellen Positionsinformationen und/oder Positionsinformationen für einen bestimmten Gültigkeitszeitpunkt zum stationären Zugangspunkt 20 zu übertragen, welche bei der Positionsberechnung berücksichtigt werden können.

Um geeignete mobile Endgeräte zu finden, kann im stationären Zugangspunkt 20 ein vom Mikroprozessor 28 ausführbares Auswerteprogramm gespeichert sein, welches zum Beispiel aus zu diskreten Zeitpunkten oder kontinuierlich empfangenen Daten die mobilen Endgeräte auswählen kann, die Positionsinformationen liefern können, mit denen die Position des stationären Zugangspunktes 20 zu einem Gültigkeitszeitpunkt verbessert oder erstmalig geschätzt werden kann.

Der Mikroprozessor 28 kann dazu ausgebildet sein, die zum Beispiel im Programmspeicher 12 gespeicherten Anweisungen zur Ausführung einer Netzausgleichung abzuarbeiten, um die Orientierungswinkel und/oder Positionskoordinaten des stationären Zugangspunktes 20 und gegebenenfalls die Orientierungswinkel und Positionskoordinaten des Smartphones 10 und des Smartphones 40 sowie die jeweilige Genauigkeit dieser Orientierungen und Positionskoordinaten und einen Gültigkeitszeitpunkt zu bestimmen.

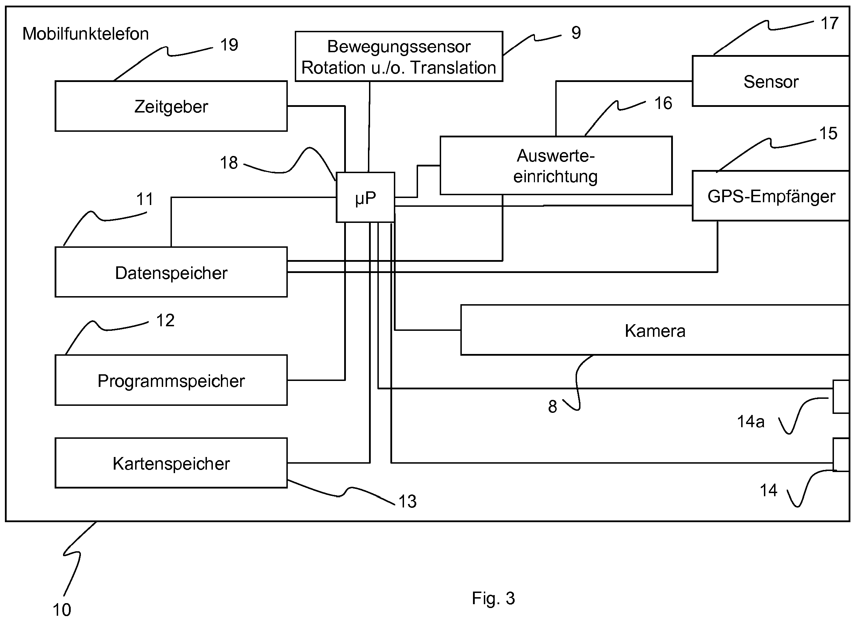

Fig. 3 zeigt ein beispielhaftes Blockschaltbild des mobilen Endgeräts 10, welches in Fig. 1 dargestellt ist, wobei ein mobiles Endgerät als solches, isoliert von einem drahtlosen Kommunikationssystem, nicht von der vorliegenden Erfindung abgedeckt wird.

Das Smartphone 10 weist wenigstens eine drahtlose Datenkommunikationsschnittstelle auf, über die es mit anderen mobilen Endgeräten, zum Beispiel den Smartphones 40 und 50, und/oder mit stationären drahtlosen Zugangspunkten, zum Beispiel mit den Wi-Fi Access Points 20 und 30 Daten austauschen kann. Im vorliegenden Beispiel weist das Smartphone 10 zwei drahtlose Datenkommunikationsschnittstellen 14 und 14a auf. Bei der Schnittstelle 14 kann es sich um eine Wi-Fi Direct-fähige Schnittstelle handeln, während die Schnittstelle 14a als LTE Direct-fähige Schnittstelle (LTE Long Term Evolution) ausgebildet sein kann, um eine Kommunikation zum Beispiel über ein zelluläres Mobilfunknetz zu ermöglichen. Neben den beispielhaften Wi-Fi Direct-fähigen und LTE Direct-fähigen Datenkommunikationsschnittstellen 14 und 14a können weitere Kommunikationsschnittstellen, wie zum Beispiel Schnittstellen gemäß dem BlueTooth-Standard, oder Nahfeld-Kommunikationsschnittstellen (NFC-Interface, Near Field Communication IF), wie zum Beispiel NFC RFID (NFC Radio Frequency Identification)-fähige Schnittstellen, im Smartphone 10 implementiert sein, die ebenfalls eine Kommunikation mit benachbarten Kommunikationseinrichtungen ermöglichen.

Das Smartphone 10 kann über die Datenkommunikationsschnittstelle 14 und/oder 14a unter anderem seine selbst ermittelten Orientierungsinformationen, sofern vorhanden, und seine selbst ermittelten Positionsinformationen zu einem stationären Zugangspunkt, in dessen Reichweite es sich befindet, übertragen. Eine Orientierungsinformation, die die Orientierung des Smartphones 10 festlegt, kann mittels einer Kamera 8 und einer Bildverarbeitung in an sich bekannter Weise erzeugt werden.

Eine Orientierungsinformation enthält zum Beispiel Angaben über wenigstens einen Orientierungswinkel, deren Genauigkeit und gegebenenfalls über einen Gültigkeitszeitpunkt. Sie kann in einem Datenspeicher 11 gespeichert werden. Eine Positionsinformation, die das Smartphone 10 beispielsweise mittels eines GPS-Empfängers 15 selbst erzeugen kann, enthält zum Beispiel Angaben über wenigstens eine Positionskoordinate des Smartphones 10, deren Genauigkeit und gegebenenfalls Angaben über einen Gültigkeitszeitpunkt. Die Positionsinformationen können ebenfalls im Datenspeicher 11 abgespeichert werden.

Anstelle eines Gültigkeitszeitpunkts kann eine Orientierungs- und/oder Positionsinformation Angaben enthalten, die dazu verwendet werden können, mit Hilfe einer Interpolation oder Extrapolation aus vorangegangenen Positionsinformationen und/oder Orientierungsinformationen einen geeigneten Gültigkeitszeitpunkt zu ermitteln.

Weiterhin weist das Smartphone 10 eine Steuereinrichtung 18 auf, die im vorliegenden Beispiel als Mikroprozessor ausgebildet ist. Der Mikroprozessor 18 kann dazu ausgebildet sein, Orientierungswinkel und Positionskoordinaten des Smartphones 10 sowie die Genauigkeiten der Orientierungswinkel und Positionskoordinaten in Abhängigkeit von wenigstens einem Beobachtungswert, der die relative Orientierung zwischen zwei Kommunikationseinrichtungen, zum Beispiel zwischen dem Smartphone 10 und dem Smartphone 40, definiert, sowie der Orientierungsinformation oder Positionsinformation wenigstens einer anderen Kommunikationseinrichtung, zum Beispiel dem stationären Zugangspunkt 10, zu bestimmen. Die vom Mikroprozessor 18 benötigten Anweisungen zum Steuern und Überwachen der Funktion des Smartphones 10 sind zum Beispiel in einem Programmspeicher 12 abgelegt.

Das Smartphone 10 kann wenigstens eine in der Fig. 3 als Sensor bezeichnete Messeinrichtung 17 zum Messen einer Messgröße enthalten, die einen Beitrag zur Bestimmung eines Beobachtungswertes liefert. Bei der Messeinrichtung 17 kann es sich um bekannte Sensoren handeln, die vorzugsweise zum Messen eines Abstands, eines Winkels oder einer Richtung zu einer anderen Kommunikationseinrichtung ausgebildet sind. Denkbar ist, dass der Sensor 17 zum Messen eines Winkels zwischen sich und einer anderen Kommunikationseinrichtung, die sich in der Nachbarschaft zum Smartphone 10 befindet, ausgebildet ist. Beispielsweise kann der Sensor 17 auch die Signalstärke des Sendesignals einer anderen Kommunikationseinrichtung messen. Im gezeigten Beispiel können dies der stationäre Zugangspunkt 20 und das Smartphone 40 sein.

Das vom Sensor 17 erzeugte Messsignal wird beispielsweise einer separaten Auswerteeinrichtung 16 zugeführt. Alternativ können Sensor 17 und Auswerteeinrichtung 16 oder Auswerteeinrichtung 16 und Mikroprozessor 18 auch eine einzige Baukomponente bilden. Die Auswerteeinrichtung 16 ist dazu ausgebildet, in Abhängigkeit von einem empfangenen Messsignal den entsprechenden Beobachtungswert zu bestimmen, der die relative Lage zwischen dem Smartphone 10 und einer weiteren Kommunikationseinrichtung, zum Beispiel dem Smartphone 40 definiert.

Um seine Position selbst bestimmen zu können, kann das Smartphone 10 einen GNSS (Global Navigation Satelliten System)-fähigen Empfänger aufweisen, der im vorliegenden Beispiel ein herkömmlicher GPS-Empfänger 15 ist. Der GPS-Empfänger 15 ist zum Empfangen und Auswerten von Positionssignalen eines Satellitensystems ausgebildet. Aus den Positionssignalen wird eine Positionsinformation gewonnen, die die Positionskoordinaten des Smartphones 10, die Genauigkeit dieser Positionskoordinaten und vorzugsweise noch einen Gültigkeitszeitpunkt enthält. Die Genauigkeit liegt in der Regel als Standardabweichung vor.

Um Lücken in den GPS-Signalen zu überbrücken, kann das Smartphone 10 auch einen Bewegungssensor 9 enthalten, der z. B. relative Positionsänderungen kurzzeitstabil erfasst, ohne hierzu Messungen zu anderen Kommunikationseinrichtungen durchzuführen. Werden die Daten vom GPS-Empfänger 15 und Sensor 9 gemeinsam vom Mikroprozessor 18 verarbeitet, realisieren der GPS-Empfänger 15 und der Sensor 9 eine Koppelortung für translatorische Bewegungen.

Das Smartphone 10 kann zum Beispiel wenigstens einen kombinierten Bewegungssensor 9 aufweisen, der translatorische und zugleich rotatorische Änderungen der Position und zugleich der Orientierung bezüglich des Smartphones 10 liefert und hierfür keine Infrastruktureinrichtungen außerhalb der Kommunikationseinrichtung 10 benötigt. Ein kombinierter Bewegungssensor 9 könnte zum Beispiel einen Beschleunigungsmesser und einen Kreisel enthalten.

Zur Überbrückung von Datenlücken oder einer unzureichenden Gleichzeitigkeit von Mess-, Rechen- oder Ausgleichungsgrößen können zusätzlich auch an sich bekannte Bewegungsmodelle oder Bewegungsänderungsmodelle für Translationen und Rotationen genutzt werden, was durch ein im Programmspeicher 12 speicherbares Programm realisiert werden kann. Hier können zum Beispiel sequentielle Ausgleichungen oder KALMAN Filtertechniken genutzt werden.

In dem Programmspeicher 12 kann ferner wenigstens ein Programm zur Ausführung einer Netzausgleichung, d.h. ein Optimierungsalgorithmus zum Schätzen der Orientierung und von Positionskoordinaten und deren Genauigkeit und vorzugsweise zum Bestimmen eines Gültigkeitszeitpunktes abgelegt sein.

Eine weitere Speichereinrichtung 13 kann im Smartphone 10 vorgesehen sein, um eine digitale geographische Karte abzuspeichern, die navigierbare Elemente enthält. Die navigierbaren Objekte dieser digitalen Karte ermöglichen einem Computerprogramm Navigationsanweisungen zu ermitteln, die die Navigation von einem Objekt zu einem anderen Objekt auch über andere Objekte erlauben, wobei die Objekte Punkt-Objekte und/oder räumliche Objekte sein können. Beispielsweise ist in der Speichereinrichtung 13 die digitale Karte eines Messgeländes abgelegt, welches ausschnittsweise in Fig. 1 gezeigt ist.

Ferner kann das Smartphone 10 einen Zeitgeber 19 aufweisen. Der Zeitgeber 19 kann dazu dienen, zu wenigstens einem vorbestimmbaren Gültigkeitszeitpunkt den Mikroprozessor 18 anzustoßen, den Sensor 17 und den GPS-Empfänger 15 und den Sensor 9 zu aktivieren, um einen Beobachtungswert und/oder die Position des Smartphones zu bestimmen. Zudem kann der Mikroprozessor 18 dazu ausgebildet sein, unter Ansprechen auf den vom Zeitgeber 19 gelieferten Gültigkeitszeitpunkt einen der gespeicherten Optimierungsalgorithmen aufzurufen und auszuführen.

Zudem kann der Mikroprozessor 18 dazu ausgebildet sein, vor Durchführung einer Netzausgleichung gespeicherte Anweisungen auszuführen, um beispielsweise geeignete Kommunikationseinrichtungen in der Umgebung des Smartphones 10 zu finden, welche, wenn vorhanden, Orientierungsinformationen, Positionsinformationen und Beobachtungswerte liefern können, welche in der Netzausgleichung zumindest zur Schätzung der Orientierung des Smartphones 10 berücksichtigt werden können. Im Ausführungsbeispiel können dies das Smartphone 40 und der stationäre Zugangspunkt 20 sein.

Nachfolgend wird die Funktionsweise des in Figur 1 gezeigten drahtlosen Kommunikationssystems 1, insbesondere die Funktionsweise der stationären drahtlosen Zugangspunkte 20 und 30 näher erläutert.

Angenommen sei, dass die Positionen der stationären drahtlosen Zugangspunkte 20 und 30 noch nicht bestimmt worden seien und dass diese Positionen nunmehr mittels einer sogenannten mobilen Crowdsourcing-Methode automatisch bestimmt werden sollen.

Weiterhin sei angenommen, dass in der Speichereinrichtung 60 Gerätekennungen und technische Daten hinterlegt sind, welche unter anderem die Smartphones 10, 40 und 50 eindeutig identifizieren und beschreiben.

Zudem sei angenommen, dass in den stationären Zugangspunkten 20 und 30 und in den für das mobile Crowdsourcing potentiell zur Verfügung stehenden Smartphones 10, 40 und 50 jeweils ein Computerprogramm, beispielsweise in Form einer App, im jeweiligen Programmspeicher hinterlegt ist, um eine automatische Bestimmung der Position des stationären drahtlosen Zugangspunktes 20 bzw. 30 zu ermöglichen. Alle Apps seien aktiviert bzw. freigegeben.

Da die Position der stationären Zugangspunkte 20 und 30 nicht bekannt ist, sorgen die jeweiligen Steuereinrichtungen 28 dafür, dass die beiden stationären Zugangspunkte 20 und 30 in einen aktiven Zustand gehen, der als "mobiler Crowdsourcing-Modus zur automatischen Bestimmung der Position" bezeichnet werden kann.

Die aktivierten stationären Zugangspunkte 20 und 30 suchen nunmehr ihre Umgebung nach mobilen Endgeräten ab, welche Informationen bereitstellen können, die die stationären Zugangspunkte 20 und 30 in die Lage versetzen, ihre Position zu bestimmen.

Im vorliegenden Beispiel sei nunmehr angenommen, dass der stationäre Zugangspunkt 20 erkannt hat, dass die beiden mobilen Endgeräte 10 und 40 sich in seiner Nähe aufhalten bzw. an ihm angemeldet haben. In ähnlicher Weise hat der stationäre Zugangspunkt 30 erkannt, dass die beiden Smartphones 40 und 50 in seiner Nähe sind und an ihn angemeldet haben.

Im Weiteren wird die Positionsbestimmung lediglich in Verbindung mit dem stationären Zugangspunkt 20 erläutert, wobei die Positionsbestimmung durch den stationären Zugangspunkts 30 im Wesentlichen gleich abläuft.

Der stationäre Zugangspunkt 20 hat nunmehr entschieden, dass er für einen ersten Gültigkeitszeitpunkt T0 automatisch seine Position bestimmen möchte. Dieser Zeitpunkt kann unter Berücksichtigung vorbestimmter Bedingungen und Kriterien automatisch vom Mikroprozessor 28 vorgegeben werden. Bedingungen und Kriterien können der Aufenthaltsort beteiligter mobiler Endgeräte und die aktuelle Genauigkeit der Positionsbestimmungen der mobilen Endgeräte sein. Unter Ansprechen auf den ersten Gültigkeitszeitpunkt, der vom Zeitgeber 29 zum Mikroprozessor 28 übertragen wird, veranlasst der Mikroprozessor 28 den Sensor 27 und die Auswerteeinrichtung 26, einen ersten Beobachtungswert, der die relative Position zwischen dem stationären Zugangspunkt 20 und dem Smartphone 10 definiert, sowie einen weiteren Beobachtungswert, der die relative Position zwischen dem stationären Zugangspunkt 20 und dem Smartphone 40 definiert, für den ersten Gültigkeitszeitpunkt zu bestimmen. Gleichzeitig fordert der stationäre Zugangspunkt 20 die beiden Smartphones 10 und 40 auf, die für den ersten Gültigkeitszeitpunkt ermittelten Positionsinformationen, welche die Position des Smartphones 10 bzw. des Smartphones 40 definieren, zum stationären Zugangspunkt 20 zu übertragen. Die Positionsinformationen enthalten die Positionskoordinaten des Smartphones 10 bzw. 40 sowie die dazugehörenden Genauigkeitswerte. Die beiden ersten Beobachtungswerte, welche vom stationären Zugangspunkt 20 bestimmt worden sind, sowie die beiden Positionsinformationen der Smartphones 10 und 40 werden vorzugsweise im Datenspeicher 21 hinterlegt. Unter Ansprechen auf die im Datenspeicher abgelegten Beobachtungswerte und Positionsinformationen wird die Position des stationären Zugangspunktes 20 für den ersten Gültigkeitszeitpunkt berechnet, wobei die Position die Positionskoordinaten des stationären Zugangspunktes 20 und deren Genauigkeit enthalten kann.

Da im dargestellten Beispiel mindestens drei Kommunikationseinrichtungen, nämlich der stationäre Zugangspunkt 20, dessen Position bestimmt werden soll, und die beiden Smartphones 10 und 40 vorhanden sind, welche für den ersten Gültigkeitszeitpunkt ein temporäres, starres geometrisches Lagenetz bilden, kann die Position des stationären Zugangspunktes 20 unter Anwendung einer aus der Geodäsie bekannten Netzausgleichung berechnet werden. Die entsprechenden mathematischen Gleichungssysteme sind im Programmspeicher 22 des stationären Zugangspunktes 20 hinterlegt und werden vom Mikroprozessor 28 ausgeführt.

Die Bestimmung des ersten Beobachtungswertes, der die relative Position zwischen dem stationären Zugangspunkt 20 und dem Smartphone 10 definiert, kann beispielsweise dadurch erfolgen, dass der Sensor 27 die vom Smartphone 10 empfangene Signalstärke misst, um den Abstand bzw. die Strecke zwischen dem stationären Zugangspunkt 20 und dem Smartpunkt 10 zu ermitteln.

Um eine präzise Streckenmessung durchführen zu können, kann der stationäre Zugangspunkt 20 vorab die technischen Daten der Smartphones 10 und 40, insbesondere deren jeweilige maximale Sendeleistung, aus dem Speichersystem 60 abfragen. Beispielsweise übertragen hierzu die Smartphones 10 und 40 ihre Gerätekennung zum stationären Zugangspunkt 20. Unter Verwendung der Gerätekennungen kann sich der stationäre Zugangspunkt 20 dann die dazugehörenden technischen Daten der beiden Smartphones 10 und 40 vom Speichersystem 60 liefern lassen.

Unter Ansprechen auf die maximale Sendeleistung des Smartphones 10 und der gemessenen empfangenen Signalstärke am Sensor 22 kann der Mikroprozessor 28 den Beobachtungswert, beziehungsweise den Abstand zwischen dem stationären Zugangspunkt 20 und dem Smartphone 10 ermitteln. In ähnlicher Weise erfolgt die Abstandsmessung zwischen dem stationären Zugangspunkt 20 und dem Smartphone 40.

Der stationäre Zugangspunkt 20 kann dazu ausgebildet sein, zu prüfen, ob die berechnete Position innerhalb eines vorgegebenen Toleranzbereichs liegt und/oder plausibel ist. Wenn ja, sorgt der Mikroprozessor 28 dafür, dass die berechnete Position im Datenspeicher 21 zur weiteren Verwendung gespeichert wird. Beispielsweise kann die im Datenspeicher 21 hinterlegte Position des stationären Zugangspunkts 20 zu den Smartphones 10 und 40 übertragen werden, die unter Berücksichtigung der Position des stationären Zugangspunkts 20 ihre jeweilige Position erstmalig ermitteln oder verbessern können.

Stellt der stationäre Zugangspunkt 20 jedoch fest, dass die berechnete Positionsgenauigkeit zu ungenau ist, so kann der Mikroprozessor 28 zu einem zweiten, späteren Gültigkeitszeitpunkt angestoßen werden, erneut die Abstände zu den Smartphones 10 und 40 zu messen und die Smartphone 10 und 40 auffordern, jeweils ihre zum zweiten Gültigkeitszeitpunkt ermittelten Positionsinformationen zum stationären Zugangspunkt 20 zu übertragen.

Unter Ausführung des im Programmspeicher 22 hinterlegten Berechnungsprogramms datiert der Mikroprozessor 28 die zum ersten und zweiten Gültigkeitszeitpunkt vorliegenden Daten zur iterativen Korrektur der berechneten Positionen auf. Diese Schritte werden mehrmals unter Steuerung des stationären Zugangspunktes 20 wiederholt, um eine Position berechnen zu können, deren Genauigkeit innerhalb des vorgegebenen Toleranzbereichs liegt.

Der stationäre Zugangspunkt 20 kann ferner dazu ausgebildet sein, Bewegungsprofile des Smartphones 10 und des Smartphones 40 selbst zu erstellen oder Bewegungsprofile vom Smartphone 10 und vom Smartphone 40 zu empfangen, um daraus einen zukünftigen Gültigkeitszeitpunkt berechnen zu können, zu welchem der stationären Zugangspunkt 20 Abstandsmessungen zu den Smartphones 10 und 40 durchführen und von diesen Positionsinformationen erhalten kann, die eine bessere, d. h. präzisere Berechnung seiner Position zu ermöglichen. Mit anderen Worten sind die stationären Zugangspunkte 20 und 30 erfindungsgemäß dazu ausgebildet, zu prüfen, ob und/oder wann die Genauigkeit der Position des jeweiligen stationären Zugangspunktes verbessert werden kann.

Mittels der digitalen Kamera 23 ist der stationäre Zugangspunkt 20 in der Lage, einen weiteren Beobachtungswert zu bestimmen, der die relative Orientierung zwischen dem stationären Zugangspunkt 20 und dem Smartphone 10 und/oder die relative Orientierung zwischen dem stationären Zugangspunkt 20 und dem Smartphone 40 definiert, zu bestimmen. Auch diese Beobachtungswerte können im Datenspeicher 21 hinterlegt werden. Mit dem im Programmspeicher 22 gespeicherten Positionsberechnungsprogramm, welches zum Beispiel eine Netzausgleichung ermöglicht, kann der Mikroprozessor 28 dann sowohl die Position als auch die Orientierung hinsichtlich des stationären Zugangspunktes 20 ermitteln.

Die bezüglich des stationären Zugangspunktes 20 vorgetragenen Erläuterungen sind analog auf den stationären Zugangspunkt 30 hinsichtlich der Smartphones 40 und 50 gültig.

Da das Smartphone 40 im dargestellten Beispiel sowohl Kontakt zum stationären Zugangspunkt 20 als auch zum stationären Zugangspunkt 30 hat, kann das Smartphone 40 die von den stationären Zugangspunkten 20 und 30 berechneten Positionen und gegebenenfalls deren Orientierung zum jeweils anderen stationären Zugangspunkt übertragen. Die ausgetauschten Positions- und Orientierungsinformationen können vom jeweiligen stationären Zugangspunkt dazu verwendet werden, seine eigene Position und gegebenenfalls seine eigene Orientierung zu berechnen oder zu verbessern.

Auf diese Weise entsteht ein flexibles und dynamisches Kommunikationssystem zum Austauschen von Positions- und gegebenenfalls Orientierungsinformationen, die vornehmlich von den beteiligten stationären Zugangspunkten 20 und 30 verwendet werden können, ihre jeweilige Position und gegebenenfalls Orientierung zu bestimmen. Allerdings können die ausgetauschten Positions- und gegebenenfalls Orientierungsinformationen auch von den beteiligten Smartphones 10, 40 und 50 verwendet werden, um ihre eigene Position zu verbessern. Dies ist insbesondere dann von Nutzen, wenn die Smartphones innerhalb eines Gebäudes keinen GPS-Empfang haben. Denn sobald sich die stationären Zugangspunkte 20 und 30 automatisch selbst eingemessen haben, können derer Positions- und gegebenenfalls Orientierungsinformationen von den beteiligten Smartphones mit verwendet werden, um ihre eigene Positionen und gegebenenfalls Orientierungen zu berechnen.

Sobald die stationären Zugangspunkte 20 und 30 ihre Positionen und gegebenenfalls Orientierungen ausreichend genau bestimmt haben, können sie jeweils automatisch den aktivierten "mobilen Crowdsourcing-Modus zum automatischen Bestimmen der Position" deaktivieren und somit den Datenverkehr zwischen den stationären Zugangspunkten und den Smartphones reduzieren.

## Patentansprüche

1. Verfahren zum automatischen Bestimmen der Position eines stationären, drahtlosen Zugangspunktes (20, 30) durch den stationären, drahtlosen Zugangspunkt (20, 30) mit Hilfe wenigstens zweier mobiler Endgeräte (10, 40, 50), gesteuert durch eine Steuereinrichtung des Zugangspunktes und mit Hilfe eines in einem Programmspeicher des Zugangspunktes gespeicherten Computerprogramms und eines in einem Programmspeicher des jeweiligen mobilen Endgeräts gespeicherten Computerprogramms, mit folgenden Schritten:
a) Bestimmen, für einen ersten Gültigkeitszeitpunkt, in dem stationären Zugangspunkt (20) eines ersten Beobachtungswertes, der einen Abstand des stationären Zugangspunkts (20) zu einem ersten mobilen Endgerät (10) definiert, und eines zweiten Beobachtungswerts, der einen Abstand des stationären Zugangspunkts (20) zu wenigstens einem zweiten mobilen Endgerät (40) definiert;
b) Ermitteln, von dem ersten mobilen Endgerät (10) für den ersten Gültigkeitszeitpunkt, einer ersten Positionsinformation, welche Angaben über eine aktuelle Position des ersten mobilen Endgeräts (10) und deren Genauigkeit enthält, und Übertragen der ermittelten ersten Positionsinformation von dem ersten mobilen Endgerät zu dem wenigstens einen stationären Zugangspunkt (20), und
Ermitteln, von dem wenigstens einen zweiten mobilen Endgerät (40) für den ersten Gültigkeitszeitpunkt wenigstens einer zweiten Positionsinformation, welche Angaben über eine aktuelle Position des wenigstens einen zweiten mobilen Endgeräts (40) und deren Genauigkeit enthält, und Übertragen der ermittelten wenigstens einen zweiten Positionsinformation von dem wenigstens einen zweiten mobilen Endgerät zu dem wenigstens einen stationären Zugangspunkt (20);
c) Berechnen, in dem stationären Zugangspunkt (20), einer Position des stationären Zugangspunkts (20) in Abhängigkeit von dem ersten und zweiten Beobachtungswert und der ersten und zweiten Positionsinformation für den ersten Gültigkeitszeitpunkt,
**dadurch gekennzeichnet, dass** die Schritte a) bis c) für wenigstens einen zweiten, späteren Gültigkeitszeitpunkt wiederholt werden, und dass die in Schritt c) für den ersten Gültigkeitszeitpunkt und den wenigstens einen zweiten Gültigkeitszeitpunkt berechneten Positionen zur iterativen Korrektur aufdatiert werden, und dass
im stationären Zugangspunkt (20) in Abhängigkeit von dessen Position und der ersten Positionsinformation und/oder der wenigstens einen zweiten Positionsinformation und/oder von einem Bewegungsprofil des ersten mobilen Endgeräts (10) und/oder von einem Bewegungsprofil des wenigstens einen zweiten mobilen Endgeräts (40) geprüft wird, ob und/oder wann eine Genauigkeit der Position des stationären Zugangspunkts (20) verbessert werden kann, und wenn ja, dass, ausgelöst durch den stationären Zugangspunkt (20), die Schritte a) bis c) erneut ausgeführt werden.

2. Verfahren nach Anspruch 1,
**dadurch gekennzeichnet, dass**
in Schritt c) die Position des stationären Zugangspunkts (20) unter Anwendung einer Netzausgleichung berechnet wird.

3. Verfahren nach einem der vorstehenden Ansprüche,
**dadurch gekennzeichnet, dass**
der erste Beobachtungswert mit Hilfe einer Streckenmessung zwischen dem stationären Zugangspunkt (20) und dem ersten mobilen Endgerät (10) und/oder der wenigstens eine zweite Beobachtungswert mit Hilfe einer Streckenmessung zwischen dem stationären Zugangspunkt (20) und dem wenigstens einen zweiten mobilen Endgerät (40) bestimmt wird.

4. Verfahren nach einem der vorstehenden Ansprüche,
**dadurch gekennzeichnet, dass**
für den ersten Gültigkeitszeitpunkt wenigstens ein dritter Beobachtungswert, der eine relative Orientierung des stationären Zugangspunkts (20) zu dem ersten mobilen Endgerät (10) definiert, bestimmt wird, und dass
in Schritt c) die Position und eine Orientierung des stationären Zugangspunkts (20) berechnet wird.

5. Verfahren nach einem der vorstehenden Ansprüche,
**dadurch gekennzeichnet, dass**
nach Ausführung des Schritts c) im stationären Zugangspunkt (20) geprüft wird, ob die berechnete Position und/oder Orientierung innerhalb eines festgelegten Toleranzbereichs liegt und/oder plausibel ist, und wenn ja, dass die berechnete Position in dem stationären Zugangspunkt (20) zur weiteren Verwendung gespeichert wird.

6. Drahtloses Kommunikationssystem (1) zur automatischen Bestimmung der Position wenigstens eines stationären drahtlosen Zugangspunkts (20, 30) durch den stationären drahtlosen Zugangspunkt (20, 30) mit Hilfe wenigstens zweier mobiler Endgeräte (10, 40, 50), aufweisend:
ein erstes mobiles Endgerät (10),
wenigstens ein zweites mobiles Endgerät (40), und wenigstens einen stationären drahtlosen Zugangspunkt (20), wobei der wenigstens eine stationäre Zugangspunkt (20) und das erste mobile Endgerät (10) zur drahtlosen Kommunikation miteinander ausgebildet sind und der wenigstens eine stationäre Zugangspunkt (20) und das wenigstens eine zweite mobile Endgerät (40) zur drahtlosen Kommunikation miteinander ausgebildet sind,
wobei der wenigstens eine stationäre Zugangspunkt (20) dazu ausgebildet ist, für einen ersten Gültigkeitszeitpunkt als einen Schritt a) einen ersten Beobachtungswert, der einen Abstand des wenigstens einen stationären Zugangspunkt (20) zu dem ersten mobilen Endgerät (10) definiert, und einen zweiten Beobachtungswert, der einen Abstand des wenigstens einen stationären Zugangspunkts (20) zu dem wenigstens einen zweiten mobilen Endgerät (40) definiert, zu bestimmen,
wobei das erste mobile Endgerät (10) dazu ausgebildet ist, als einen Schritt b1) für den ersten Gültigkeitszeitpunkt eine erste Positionsinformation zu bestimmen, welche Angaben über eine aktuelle Position des ersten mobilen Endgeräts und deren Genauigkeit enthält, und die erste
Positionsinformation zu dem wenigstens einen stationären Zugangspunkt (20) zu übertragen, und wobei das wenigstens eine zweite mobile Endgerät (40) dazu ausgebildet ist, als einen Schritt b2) für den ersten Gültigkeitszeitpunkt wenigstens eine zweite Positionsinformation zu bestimmen, welche Angaben über eine aktuelle Position des wenigstens einen zweiten mobilen Endgeräts und deren Genauigkeit enthält, und
die wenigstens eine zweite Positionsinformation zu dem wenigstens einen stationären Zugangspunkt (20) zu übertragen, und wobei
der wenigstens eine stationäre Zugangspunkt (20) eine Recheneinheit (28) aufweist, die dazu ausgebildet ist, als einen Schritt c) eine Position des stationären Zugangspunkts (20) in Abhängigkeit von dem ersten und zweiten Beobachtungswert und der ersten und zweiten Positionsinformation für den ersten
Gültigkeitszeitpunkt zu berechnen, und einen Speicher (21) aufweist, in dem die berechnete Position speicherbar ist,
und wobei
das drahtlose Kommunikationssystem (1) dazu ausgebildet ist, die Schritte a), b1), b2) und c) für wenigstens einen zweiten, späteren
Gültigkeitszeitpunkt zu wiederholen, wobei die Recheneinheit (28) des wenigstens einen stationären Zugangspunkts (20) dazu ausgebildet ist, die für den ersten Gültigkeitszeitpunkt und den wenigstens einen zweiten Gültigkeitszeitpunkt berechneten Positionen zur iterativen Korrektur aufzudatieren, und wobei der wenigstens eine stationäre Zugangspunkt eine Steuereinrichtung zum Steuern der automatischen Bestimmung der Position des wenigstens einen stationären Zugangspunkts mit Hilfe eines in einem Programmspeicher des wenigstens einen stationären Zugangspunktes gespeicherten Computerprogramms und jeweils eines in einem Programmspeicher des ersten und wenigstens einen zweiten mobilen Endgeräts gespeicherten Computerprogramms aufweist, und wobei der stationäre Zugangspunkt (20) dazu ausgebildet ist, in Abhängigkeit von dessen Position und der ersten Positionsinformation und/oder der wenigstens einen zweiten Positionsinformation und/oder von einem Bewegungsprofil des ersten mobilen Endgeräts (10) und/oder von einem Bewegungsprofil des wenigstens einen zweiten mobilen Endgeräts (40) zu prüfen, ob und/oder wann eine Genauigkeit der Position des stationären Zugangspunkts (20) verbessert werden kann, und wenn ja, ein erneutes Ausführen der Schritte a), b1), b2) und c) auszulösen.

7. Drahtloses Kommunikationssystem nach Anspruch 6,
**dadurch gekennzeichnet, dass**
die Recheneinheit (28) eine Netzausgleichung durchführt, um die Position des wenigstens einen stationären Zugangspunkts zu berechnen.

8. Drahtloses Kommunikationssystem nach einem der Ansprüche 6 oder 7,
**dadurch gekennzeichnet, dass**
der wenigstens eine stationäre Zugangspunkt (20) wenigstens eine Sensoreinrichtung (27) aufweist, welche dazu ausgebildet ist, den Abstand des wenigstens einen stationären Zugangspunktes zum ersten mobilen Endgerät (10) und/oder zum wenigstens einen zweiten mobilen Endgerät (40) zu messen.

9. Drahtloses Kommunikationssystem nach Anspruch 8,
**dadurch gekennzeichnet, dass**
der wenigstens eine stationäre Zugangspunkt (20) wenigstens eine Auswerteeinrichtung (26) zum Auswerten von empfangenen Signalstärken und/oder Signallaufzeiten aufweist.

10. Drahtloses Kommunikationssystem nach einem der Ansprüche 6 bis 9,
**gekennzeichnet durch**
wenigstens ein drahtloses lokales Netzwerk, wobei der wenigstens eine stationäre Zugangspunkt ein Zugangspunkt des drahtlosen lokalen Netzwerks ist.

11. Drahtloses Kommunikationssystem nach einem der Ansprüche 6 bis 10,
**gekennzeichnet durch** eine
Speichereinrichtung (60), in welcher technische Daten, insbesondere die Sendeleistung, und/oder eine Gerätekennung des ersten mobilen Endgerätes (10) und/oder des wenigstens einen zweiten mobilen Endgerätes (40) abgespeichert sind, wobei der stationäre Zugangspunkt dazu ausgebildet ist, die technischen Daten aus der Speichereinrichtung (60) abzurufen.

12. Drahtloses Kommunikationssystem nach einem der Ansprüche 6 bis 11,
**dadurch gekennzeichnet, dass**
der wenigstens eine stationäre Zugangspunkt (20) dazu ausgebildet ist, die berechnete Position zum ersten mobilen Endgerät (10) und/oder zum wenigstens einen zweiten mobilen Endgerät (40) zu übertragen.

13. Stationärer drahtloser Zugangspunkt (20, 30), der dazu bestimmt und ausgebildet ist, in einem drahtlosen Kommunikationssystem (1) nach einem der Ansprüche 6 bis 12 betrieben zu werden.

14. Computerprogramm enthaltend
eine Vielzahl von Anweisungen, welche in wenigstens einem stationären drahtlosen Zugangspunkt (20, 30) und in wenigstens zwei mobilen Endgeräten (10, 40, 50) speicherbar sind, wobei die Anweisungen, wenn sie von dem wenigstens einen stationären Zugangspunkt (20, 30) und den wenigstens zwei mobilen Endgeräten (10, 40,1 50) abgearbeitet werden, das Verfahren nach einem der Ansprüche 1 bis 5 ausführen.

## Claims

1. A method for automatically determining the position of a stationary, wireless access point (20, 30) by the stationary, wireless access point (20, 30) with the aid of at least two mobile terminals (10, 40, 50), controlled by a control device of the access point and with the aid of a computer program stored in a program memory of the access point and a computer program stored in a program memory of the respective mobile terminal, comprising the following steps:
a) determining, for a first validity point of time, in the stationary access point (20) a first observation value which defines a distance of the stationary access point (20) to a first mobile terminal (10), and a second observation value which defines a distance of the stationary access point (20) to at least one second mobile terminal (40);
b) determining, from the first mobile terminal (10) for the first validity point of time, a first position information, which contains information about a current position of the first mobile terminal (10) and its accuracy , and transmitting the determined first position information from the first mobile terminal to the at least one stationary access point (20), and determining, from the at least one second mobile terminal (40) for the first validity point of time, a second position information, which contains information about a current position of the first mobile terminal (10) and its accuracy, and transmitting the determined second position information from the at least second mobile terminal to the at least one stationary access point (20);
c) calculating, at the stationary access point (20), a position of the stationary access point (20) in dependance of the first and second observation values and the first and second position information for the first validity point of time,
**characterised in that** steps a) to c) are repeated for at least one second, later validity point in time, and **in that** the positions calculated in step c) for the first validity point of time and the at least one second validity point of time are updated for iterative correction, and **in that**
in the stationary access point (20), depending on its position and the first position information and/or the at least one second position information and/or on a movement profile of the first mobile terminal (10) and/or on a movement profile of the at least one second mobile terminal (40), it is checked whether and/or when an accuracy of the position of the stationary access point (20) can be improved, and if so, that, triggered by the stationary access point (20), steps a) to c) are carried out again.

2. The method according to claim 1,
**characterised in that**
in step c) the position of the stationary access point (20) is calculated using a network adjustment.

3. The method according to one of the preceding claims,
**characterised in that**
the first observation value is determined with the aid of a distance measurement between the stationary access point (20) and the first mobile terminal (10) and/or the at least one second observation value is determined with the aid of a distance measurement between the stationary access point (20) and the at least one second mobile terminal (40).

4. The method according to one of the preceding claims,
**characterised in that**
at least a third observation value, which defines a relative orientation of the stationary access point (20) to the first mobile terminal (10), is determined for the first validity point of time, and **in that** the position and an orientation of the stationary access point (20) are calculated
in step c).

5. The method according to one of the preceding claims,
**characterised in that**,
after execution of step c), a check is made at the stationary access point (20) as to whether the calculated position and/or orientation lies within a defined tolerance range and/or is plausible, and if so, that the calculated position is stored in the stationary access point (20) for further use.

6. A wireless communication system (1) for automatically determining the position of at least one stationary wireless access point (20, 30) by the stationary wireless access point (20, 30) with the aid of at least two mobile terminals (10, 40, 50), comprising:
a first mobile terminal (10),
at least one second mobile terminal (40), and
at least one stationary wireless access point (20), wherein the at least one stationary access point (20) and the first mobile terminal (10) are configured to communicate wirelessly with each other, and the at least one stationary access point (20) and the at least one second mobile terminal (40) are configured to communicate wirelessly with each other,
wherein the at least one stationary access point (20) is configured to determine, for a first validity point of time, as a step a) a first observation value, which defines a distance of the at least one stationary access point (20) to the first mobile terminal (10), and a second observation value, which defines a distance of the at least one stationary access point (20) to the at least one second mobile terminal (40), wherein the first mobile terminal (10) is configured to determine, as a step b1) for the first validity point of time, a first position information which includes information about a current position of the first mobile terminal and its accuracy, and to transmit the first position information to the at least one stationary access point (20), and wherein the at least one second mobile terminal (40) is configured to determine, as a step b2) for the first validity point of time, at least one second position information which includes information about a current position of the at least one second mobile terminal and its accuracy, and to transmit the at least one second position information to the at least one stationary access point (20), and wherein
the at least one stationary access point (20) has a computing unit (28) which is configured to calculate, as a step c), a position of the stationary access point (20) in dependence of the first and second observation values and the first and second position information for the first validity point of time, and has a memory (21) in which the calculated position can be stored, and wherein
the wireless communication system (1) is configured to repeat steps a), b1), b2) and c) for at least one second, later validity point of time, wherein the computing unit (28) of the at least one stationary access point (20) is configured to update the positions calculated for the first validity point of time and the at least one second validity point of time for iterative correction, and wherein the at least one stationary access point comprises a control device for controlling the automatic determination of the position of the at least one stationary access point with the aid of a computer program stored in a program memory of the at least one stationary access point and a respective computer program stored in a program memory of the first and at least one second mobile terminal, and wherein
the stationary access point (20) is configured to check in dependence of its position and the first position information and/or the at least one second position information and/or a movement profile of the first mobile terminal (10) and/or a movement profile of the at least one second mobile terminal (40), whether and/or when an accuracy of the position of the stationary access point (20) can be improved, and if so, to trigger a renewed execution of steps a), b1), b2) and c) .

7. The wireless communication system according to claim 6, **characterised in that**
the computing unit (28) performs a network adjustment in order to calculate the position of the at least one stationary access point.

8. The wireless communication system according to one of the claims 6 or 7, **characterised in that**
the at least one stationary access point (20) comprises at least one sensor device (27) which is configured to measure the distance of the at least one stationary access point to the first mobile terminal (10) and/or to the at least one second mobile terminal (40) .

9. The wireless communication system according to claim 8, **characterised in that**
the at least one stationary access point (20) comprises at least one evaluation device (26) for evaluating received signal strengths and/or signal propagation times.

10. The wireless communication system according to any one of claims 6 to 9, **characterised by**
at least one wireless local area network, wherein the at least one stationary access point is an access point of the wireless local area network.

11. The wireless communication system according to one of the claims 6 to 10, **characterised by**
a memory device (60) in which technical data, in particular the transmission power, and/or a device identifier of the first mobile terminal (10) and/or of the at least one second mobile terminal (40) are stored, wherein the stationary access point is configured to retrieve the technical data from the memory device (60).

12. The wireless communication system according to one of the claims 6 to 11, **characterised in that** the at least one stationary access point (20) is configured to transmit the calculated position to the first mobile terminal (10) and/or to the at least one second mobile terminal (40).

13. A stationary wireless access point (20, 30) determined and configured to be operated in a wireless communication system (1) according to any one of claims 6 to 12.

14. A computer program comprising
a plurality of instructions which are storable in at least one stationary wireless access point (20, 30) and in at least two mobile terminals (10, 40, 50), wherein the instructions, when processed by the at least one stationary access point (20, 30) and the at least two mobile terminals (10, 40, 50), execute the method according to any one of claims 1 to 5.

## Revendications

1. Procédé pour la définition automatique de la position d'un point d'accès stationnaire (20, 30) sans fil par le point d'accès stationnaire (20, 30) sans fil à l'aide d'au moins deux terminaux mobiles (10, 40, 50), commandé par un dispositif de commande du point d'accès et à l'aide d'un programme informatique stocké dans une mémoire de programme du point d'accès et d'un programme informatique stocké dans une mémoire de programme du terminal mobile respectif, avec des étapes suivantes :
a) de définition, pour un premier moment de validité, dans le point d'accès stationnaire (20) d'une première valeur d'observation, qui définit une distance du point d'accès stationnaire (20) par rapport à un premier terminal mobile (10), et d'une deuxième valeur d'observation, qui définit une distance du point d'accès stationnaire (20) par rapport au moins à un deuxième terminal mobile (40) ;
b) de détermination, par le premier terminal mobile (10) pour le premier moment de validité, d'une première information de position, laquelle contient des indications sur une position instantanée du premier terminal mobile (10) et sur son exactitude, et de transmission de la première information de position déterminée par le premier terminal mobile à l'au moins un point d'accès stationnaire (20), et de détermination, par l'au moins un deuxième terminal mobile (40) pour le premier moment de validité, d'au moins une deuxième information de position, laquelle contient des indications sur une position instantanée de l'au moins un deuxième terminal mobile (40) et sur son exactitude, et de transmission de l'au moins une deuxième information de position déterminée par l'au moins un deuxième terminal mobile à l'au moins un point d'accès stationnaire (20) ;
c) de calcul, dans le point d'accès stationnaire (20), d'une position du point d'accès stationnaire (20) en fonction de la première et de la deuxième valeur d'observation et de la première et de la deuxième information de position pour le premier moment de validité,
**caractérisé en ce que** les étapes a) à c) sont répétées pour au moins un deuxième moment de validité ultérieur, et que les positions calculées à l'étape c) pour le premier moment de validité et l'au moins un deuxième moment de validité sont mises à jour en vue de la correction itérative, et que
il est vérifié dans le point d'accès stationnaire (20) en fonction de sa position et de la première information de position et/ou de l'au moins une deuxième information de position et/ou d'un profil de déplacement du premier terminal mobile (10) et/ou d'un profil de déplacement de l'au moins un deuxième terminal mobile (40) si et/ou quand une exactitude de la position du point d'accès stationnaire (20) peut être améliorée, et le cas échéant, si et/ou quand, déclenchées par le point d'accès stationnaire (20), les étapes a) à c) sont exécutées à nouveau.

2. Procédé selon la revendication 1,
**caractérisé en ce que**
à l'étape c), la position du point d'accès stationnaire (20) est calculée en appliquant un ajustement de réseau.

3. Procédé selon l'une quelconque des revendications précédentes,
**caractérisé en ce que**
la première valeur d'observation est définie à l'aide d'une mesure de distance entre le point d'accès stationnaire (20) et le premier terminal mobile (10) et/ou l'au moins une deuxième valeur d'observation est définie à l'aide d'une mesure de distance entre le point d'accès stationnaire (20) et l'au moins un deuxième terminal mobile (40).

4. Procédé selon l'une quelconque des revendications précédentes,
**caractérisé en ce que**
est définie, pour le premier moment de validité, au moins une troisième valeur d'observation, qui définit une orientation relative du point d'accès stationnaire (20) par rapport au premier terminal mobile (10),
et que
à l'étape c), la position et une orientation du point d'accès stationnaire (20) sont calculées.

5. Procédé selon l'une quelconque des revendications précédentes,
**caractérisé en ce que**
après l'exécution de l'étape c), il est vérifié dans le point d'accès stationnaire (20) si la position et/ou l'orientation calculées se situent dans une plage de tolérance fixée et/ou sont plausibles, et le cas échéant, si la position calculée est stockée dans le point d'accès stationnaire (20) pour l'utilisation ultérieure.

6. Système de communication sans fil (1) destiné à définir de manière automatique la position d'au moins un point d'accès stationnaire (20, 30) sans fil par le point d'accès stationnaire (20, 30) sans fil à l'aide d'au moins deux terminaux mobiles (10, 40, 50),
présentant :
un premier terminal mobile (10),
au moins un deuxième terminal mobile (40), et
au moins un point d'accès stationnaire (20) sans fil, dans lequel l'au moins un point d'accès stationnaire (20) et le premier terminal mobile (10) sont réalisés pour communiquer sans fil l'un avec l'autre et l'au moins un point d'accès stationnaire (20) et l'au moins un deuxième terminal mobile (40) sont réalisés pour communiquer sans fil l'un avec l'autre,
dans lequel l'au moins un point d'accès stationnaire (20) est réalisé pour définir pour un premier moment de validité en tant qu'une étape a) une première valeur d'observation, qui définit une distance de l'au moins un point d'accès stationnaire (20) par rapport au premier terminal mobile (10), et une deuxième valeur d'observation, qui définit une distance de l'au moins un point d'accès stationnaire (20) par rapport à l'au moins un deuxième terminal mobile (40),
dans lequel le premier terminal mobile (10) est réalisé pour définir en tant qu'une étape b1) pour le premier moment de validité, une première information de position, laquelle contient des indications sur une position instantanée du premier terminal mobile et sur son exactitude, et pour transmettre la première information de position concernant l'au moins un point d'accès stationnaire (20), et dans lequel l'au moins un deuxième terminal mobile (40) est réalisé pour définir en tant qu'une deuxième étape b2) pour le premier moment de validité au moins une deuxième information de position, laquelle contient des indications sur une position instantanée de l'au moins un deuxième terminal mobile et sur son exactitude, et pour transmettre l'au moins une deuxième information de position à l'au moins un point d'accès stationnaire (20), et dans lequel
l'au moins un point d'accès stationnaire (20) présente une unité de calcul (28), qui est réalisée pour calculer en tant qu'un étape c) une position du point d'accès stationnaire (20) en fonction de la première et de la deuxième valeur d'observation et de la première et de la deuxième information de position pour le premier moment de validité, et présente une mémoire (21), dans laquelle la position calculée peut être stockée,
et dans lequel
le système de communication sans fil (1) est réalisé pour répéter les étapes a), b1), b2) et c) pour au moins un deuxième moment de validité ultérieur, dans lequel l'unité de calcul (28) de l'au moins un point d'accès stationnaire (20) est réalisée pour mettre à jour les positions calculées pour le premier moment de validité et l'au moins un deuxième moment de validité en vue de la correction itérative, et dans lequel l'au moins un point d'accès stationnaire présente un dispositif de commande pour commander la définition automatique de la position de l'au moins un point d'accès stationnaire à l'aide d'un programme informatique stocké dans une mémoire de programme de l'au moins un point d'accès stationnaire et respectivement d'un programme informatique stocké dans une mémoire de programme du premier et d'au moins un deuxième terminal mobile, et dans lequel le point d'accès stationnaire (20) est réalisé pour vérifier en fonction de sa position et e la première information de position et/ou de l'au moins une deuxième information de position et/ou d'un profil de déplacement du premier terminal mobile (10) et/ou d'un profil de déplacement de l'au moins un deuxième terminal mobile (40) si et/ou quand une exactitude de la position du point d'accès stationnaire (20) peut être améliorée et, le cas échéant, pour déclencher une nouvelle exécution des étapes a), b1), b2) et c).

7. Système de communication sans fil selon la revendication 6,
**caractérisé en ce que**
l'unité de calcul (28) met en œuvre un ajustement de réseau pour calculer la position de l'au moins un point d'accès stationnaire.

8. Système de communication sans fil selon l'une quelconque des revendications 6 ou 7,
**caractérisé en ce que**
l'au moins un point d'accès stationnaire (20) présente au moins un dispositif de capteur (27), lequel est réalisé pour mesurer la distance de l'au moins un point d'accès stationnaire par rapport au premier terminal mobile (10) et/ou par rapport à l'au moins un deuxième terminal mobile (40) .

9. Système de communication sans fil selon la revendication 8,
**caractérisé en ce que**
l'au moins un point d'accès stationnaire (20) présente au moins un système d'évaluation (26) destiné à évaluer des intensités de signaux reçues et/ou des temps de propagation de signaux.

10. Système de communication sans fil selon l'une quelconque des revendications 6 à 9,
**caractérisé par**
au moins un réseau local sans fil, dans lequel l'au moins un point d'accès stationnaire est un point d'accès du réseau local sans fil.

11. Système de communication sans fil selon l'une quelconque des revendications 6 à 10,
**caractérisé par** un dispositif de stockage (60), dans lequel des données techniques, en particulier la puissance d'envoi, et/ou un identifiant d'appareil du premier terminal mobile (10) et/ou de l'au moins un deuxième terminal mobile (40) sont sauvegardés, dans lequel le point d'accès stationnaire est réalisé pour consulter les données techniques depuis le dispositif de stockage (60).

12. Système de communication sans fil selon l'une quelconque des revendications 6 à 11,
**caractérisé en ce que**
l'au moins un point d'accès stationnaire (20) est réalisé pour transmettre la position calculée au premier terminal mobile (10) et/ou à l'au moins un deuxième terminal mobile (40).

13. Point d'accès sans fil stationnaire (20, 30), qui se destiné à et est réalisé pour fonctionner dans un système de communication sans fil (1) selon l'une quelconque des revendications 6 à 12.

14. Programme informatique contenant
une pluralité d'instructions, lesquelles peuvent être stockées dans au moins un point d'accès stationnaire (20, 30) sans fil et dans au moins deux terminaux mobiles (10, 40, 50), dans lequel les instructions, lorsqu'elles sont exécutées par l'au moins un point d'accès stationnaire (20, 30) et les au moins deux terminaux mobiles (10, 40, 50), exécutent le procédé selon l'une quelconque des revendications 1 à 5.
